# EUROPEAN PATENT APPLICATION

(11) **EP 4 312 020 A1**
(43) Date of publication of application: **31.01.2024**
(21) Application number: 22187132.0
(22) Date of filing: 27.07.2022
(51) Int. Cl.: G01N 21/956, G01B 11/06, H05K 13/08, F21K 9/69

(54) **INSPECTION SYSTEM AND METHOD FOR ANALYZING DEFECTS**

(71) Applicant: WiTrins s.r.o., 25064 Hovorcovice (CZ)
(72) Inventor: Linhart, Pavel, 15800 Praha 13 (CZ)
(74) Representative: advotec.

(57) **Abstract**

The invention relates to an inspection system and to a method for analyzing defects in a product, in particular a printed circuit board product, a semiconductor wafer or the like, the inspection system comprising a projection device (11), an optical detection device (12), and a processing device, the projection device having an illuminating unit (16) and a spectrometer member (17) configured to split white light into its spectral components and project a multichromatic light beam (18) thus formed from monochromatic light beams onto a product (19) at an angle of incidence β, the optical detection device having a detection unit (13) comprising a camera (14) and an objective (15), the camera being configured to detect the multichromatic light beam reflected on the product in a detection plane (21) of the detection unit, the detection plane being perpendicular, preferably orthogonal, to a product surface (20) of the product, the illuminating unit having at least two light-emitting diodes disposed in a row (23) and an exit aperture (25) extending along the row.

## Description

The application relates to an inspection system and a method for analyzing defects in a product, in particular a printed circuit board product, a semiconductor wafer or the like, the inspection system comprising a projection device, an optical detection device, and a processing device, the projection device having an illuminating unit and a spectrometer member configured to split white light into its spectral components and project a multichromatic light beam thus formed from monochromatic light beams onto a product at an angle of incidence β, the optical detection device having a detection unit comprising a camera and an objective, the camera being configured to detect the multichromatic light beam reflected on the product in a detection plane of the detection unit, the detection plane being perpendicular, preferably orthogonal, to a product surface of the product.

In the case of the known inspection systems and methods for analyzing defects in a product, a height profile of a printed circuit board or of components disposed on a printed circuit board, for example, can be determined using a spectroscopic method. The product to be inspected can be what is referred to as a PCB (printed circuit board), a photovoltaic cell or a semiconductor wafer. PCBs can be produced, for example, by printing a conductive paste on a printed circuit board substrate so as to form conductor tracks or electronic components, such as resistors. Different materials, such as copper, gold, aluminum, titanium, etc., can be applied to the substrate. The printed circuit board product can additionally be equipped with wired structural elements or so-called SMD elements, be coated with a solder mask, and be soldered in the course of the given production method, such as by wave soldering. In these production methods, a series of defects, such as an incompletely printed conductor track, a faulty solder joint or a missing component, can occur, which might lead to a malfunction of the printed circuit board product. Hence, it is frequently required for the product to be analyzed for potential defects in the course of its production.

An inspection system and a method for analyzing defects in products with which a surface of a PCB can be optically measured is known from EP 2 307 852 B1. It involves directing a polychromatic light beam originating from a white light source through a prism to produce a multichromatic light beam which is projected onto the printed circuit board product at an angle of incidence. Depending on the different heights of a surface of the printed circuit board product, the surface, as a function of its height, appears in a spectral color of the multichromatic light beam directed at this height. A monochromatic light beam thus reflected from the surface in question is detected by an optical detection device, in particular a line scan camera or a line of an area scan camera. With the desired angle of incidence for directing the multichromatic light beam at the detection plane and the position of the printed circuit board product relative to the line scan camera being adjusted, a height information of the surface in question of the printed circuit board product can then be calculated by means of a processing device or a device for data processing.

The inspection system and the method described above are disadvantageous in that a surface of a product can be reliably inspected up to a certain width only. Hence, it is frequently necessary for products wider than the projection device or the detection device to be analyzed by recording multiple images or by repeatedly and successively scanning adjacent areas of the product at hand. This makes implementing an inspection of a relatively wide product time-consuming and prone to mistakes.

Since line scan cameras, for example, are available in relative large lengths or can be adjusted to a greater width by means of an objective, widening the inspection system or an optical detection device perpendicular to a direction of movement or a scanning direction of the product is less difficult than widening the illuminating unit. While relatively long illuminants, such as fluorescent tubes, are known, they only provide a low luminous flux, which means that the illuminance on the product is insufficient. Point light sources with high luminous flux, on the other hand, pose the problem that the distribution of the illuminance on the product is inhomogeneous. Moreover, the use of multiple point light sources for image recording by means of the camera leads to image defects and diffraction phenomena, such as aliasing or the like.

The object of the present invention is to propose an inspection system and a method for analyzing defects in a product which allow wide products to be analyzed for defects in a simple and reliable manner by simple means.

This object is attained by an inspection system having the features of claim 1 and a method having the features of claim 17.

The inspection system according to the invention for analyzing defects in a product, in particular a printed circuit board product, a semiconductor wafer or the like, comprises a projection device, an optical detection device, and a processing device, the projection device having an illuminating unit and a spectrometer member configured to split white light into its spectral components and project a multichromatic light beam thus formed from monochromatic light beams onto a product at an angle of incidence, the optical detection device a having detection unit comprising a camera and an objective, the camera being configured to detect the multichromatic light beam reflected on the product in a detection plane of the detection unit, the detection plane being perpendicular, preferably orthogonal, to a product surface of the product, the illuminating unit having at least two light-emitting diodes disposed in a row and an exit aperture extending along the row.

Depending on the different heights of a product surface, a reflected image of the multichromatic light beam on the product surface shifts relative to an optical axis of the objective or the detection plane of the detection device or the camera because of the multichromatic light beam which is directed at the detection plane at the angle of incidence β and whose wavelength varies according to a height in the detection plane. This has the effect that the reflected image in question is also imaged at an offset relative to the optical axis or the detection plane in the image plane of the camera as a function of the wavelength, i.e., the height. By determining a location of the image in the image plane, it becomes possible for height information of the product surface to be calculated by means of the processing device. Alternatively, it is also possible to determine a wavelength of the light reflected on the product by means of the camera instead of determining a location of the image in the image plane and to calculate height information of the product surface therefrom. Depending on how the reflected image is captured by means of the camera, the camera can therefore be a line scan camera or an area scan camera or have a camera sensor of this kind. The camera sensor can be a monochromatic sensor or a multichromatic sensor.

According to the invention, the illuminating unit hast at least two or more light-emitting diodes which are positioned in a row relative to each other. In particular, the light-emitting diodes are spaced apart from each other and disposed parallel to the detection plane. Also, the illuminating unit has an exit aperture which extends along the row of light-emitting diodes. This allows the illuminating unit to form a single light beam which runs parallel to the detection plane without interruption and thus allows the product to be illuminated in the detection plane. The exit aperture can be relatively long. A length of the exit aperture is not limited by the number of light-emitting diodes or their distance, which means that the illuminating unit can have an exit aperture of basically any length. Since the exit aperture has a comparatively small width in relation to a length, in particular a width many times smaller, a dispersion of white light of the light-emitting diodes along the detection plane can be essentially avoided. Also, aliasing can be advantageously reduced. Likewise, a high luminous flux and thus a high illuminance on a product surface can be achieved with the light-emitting diodes. This makes it possible for products of a relatively large width to be analyzed quickly and reliably in one run or one scan at high quality using the inspection system.

Consequently, a homogenous intensity distribution of the white light along the detection plane can be established by means of the illuminating unit. In this context, the term detection plane refers to a plane limited in width and essentially corresponding to or defined by a product width detectable by the optical detection device or the camera with the objective.

The illuminating unit can have an LED module comprising a plurality of light-emitting diodes, and the LED module can be disposed parallel to the detection plane. In this case, the LED module is an illuminant comprising the plurality of light-emitting diodes, which can be disposed at a relative distance and in a row on a PCB of the LED module, for example. The LED module can be strip-shaped. LED modules of this kind are available at relatively low cost, which makes the inspection system less expensive to produce.

The illuminating unit can have respective aperture members associated with the light-emitting diodes. This makes it possible for the light, i.e., the white light, emitted by the light-emitting diodes to be limited. Potential interference between light beams of the respective light-emitting diodes as a result of reflections or the like can be avoided in this manner. Also, the respective aperture members can equalize potential differences of the light-emitting diodes, which may result from their production. Overall, an even more homogenous light distribution can be achieved in this manner.

The aperture member can be provided with a three-dimensional aperture which can have a cross section that widens from the light-emitting diode in the direction of a beam path of the projection device. The three-dimensional aperture can thus advantageously limit a beam path of the respective light-emitting diode. An inner surface of the three-dimensional aperture can be reflective or alternatively non-reflective. The three-dimensional aperture can be disposed directly on the light-emitting diode. Furthermore, the three-dimensional aperture can form a space limited by the aperture. Alternatively, the aperture itself can be formed by one or more optical elements; for example, it can be made of glass. In this case, the aperture itself serves as a light guide for light emitted by the light-emitting diode. Furthermore, the aperture can alternatively be formed by one or more lenticular lenses or a lenticular image or a lenticular print. Optionally or additionally, parallax barriers can be used for forming the aperture. By using films or thin optical elements of this kind, an aperture taking up very little installation space can be formed.

The respective apertures of the aperture members can be adjacent to each other. Consequently, aperture openings of the respective apertures can be adjacent to each other. Thus, it can be ensured that apertures are disposed in a row along the detection plane without there being larger distances between the respective aperture openings. This makes it possible for a particularly homogenous light distribution on a product surface to be achieved.

The aperture can have the shape of a pyramid. Consequently, the aperture can have a square or rectangular cross section. Alternatively, the aperture can also be conical. Furthermore, the aperture can be convex, concave or of a straight shape.

The aperture can be formed by an optical component, preferably at least one plane plate. The plane plate can serve as a light guide for light of the respective light-emitting diode. Furthermore, the plane plate can also have a central passage opening. This allows light of the light-emitting diode to be guided through the plane plate partially only, depending on a distribution intensity of the light of the light-emitting diode. Potential differences in the intensity of the light distribution can be advantageously equalized in this manner.

The aperture can be formed by a stack of optical components, preferably plane plates. This allows the aperture to be easily adapted to different sections of light-emitting diodes. This is of particular advantage if different LED modules can be used for forming the illuminating unit. The stack can comprise at least two plane plates or more plane plates.

The illuminating unit can have respective lens assemblies associated with the light-emitting diodes. If the illuminating unit has aperture members, the respective lens assemblies may be associated with the light emitting diodes downstream of the aperture members in a beam path.

The lens assembly can have at least two lenses which can be configured to converge and focus the white light of the light-emitting diodes. Moreover, the lens assembly can comprise further lenses. The lenses can be converging lenses. Furthermore, the lenses can be plano-convex. The lenses can be spherical or aspherical lenses. If the illuminating unit has an aperture, one of the lenses can be disposed directly downstream of the aperture. The lenses can be spaced apart relative to each other.

A focal point of the lens assembly can be formed in the exit aperture. The white light emitted by the light-emitting diode can be converged and focused in such a manner by means of the lens assembly that a particularly high luminous flux is established in the area of the exit aperture.

The exit aperture can be formed by an uninterrupted air gap. This makes the exit aperture particularly simple to produce. In this case, the exit aperture is a slit. The exit aperture configured in this manner allows a suitable beam shape of the multichromatic light beam to be formed, which masks the undesired components of said light beam.

The spectrometer member can be adjacent to and disposed immediately downstream of the illuminating unit in the direction of the beam path of the projection device. The spectrometer member can be used to split the white light produced by the illuminating unit into its spectral components. The spectrometer member and the illuminating unit can be housed in a shared housing or be separate from each other.

The spectrometer member can have at least one diffractive and dispersive optical element which can extend parallel to the detection plane. For example, the optical element can be a prism or a diffraction grating. In a particularly simple embodiment, the optical element can be a dispersive prism in the shape of an isosceles triangle, for example. An optical element of this kind can simply be provided in a length corresponding to the length of the illuminating unit. In particular, the optical element can be extend parallel to the detection plane without interruption in this case.

The projection device can emit light in the wavelength ranges red, green, blue, infrared, and/or ultraviolet, preferably in a wavelength range of 400 nm to 700 nm, and the camera can detect said light.

In the method according to the invention for analyzing defects in a product, in particular a printed circuit board product, a semiconductor wafer or the like, using an inspection system, the inspection system comprises a projection device, an optical detection device and a processing device, an illuminating unit and spectrometer member of the projection device being used to split white light into its spectral components and project a multichromatic light beam thus formed from monochromatic light beams onto a product at an angle of incidence β, the optical detection device having a detection unit comprising a camera and an objective, a multichromatic light beam being reflected on the product in a detection plane of the detection unit, the detection plane being perpendicular, preferably orthogonal, to a product surface of the product, the multichromatic light beam being detected by means of the camera, at least two light-emitting diodes disposed in a row and an exit aperture of the illuminating unit extending along the row being used to establish a homogenous intensity distribution of the white light along the detection plane. Reference is made to the description of advantages of the inspection system according to the invention regarding the advantageous effects of the method according to the invention.

Other advantageous embodiments of the method are apparent from the description of features of the claims dependent on device claim 1.

Hereinafter, preferred embodiments of the invention are discussed in more detail with reference to the accompanying drawings.
- Fig. 1: is a simplified schematic illustration of an inspection system in a side view;
- Fig. 2: is a schematic illustration of a projection device in a top view;
- Fig. 3: shows an illuminating unit of the projection device of Fig. 2;
- Fig. 4: is a schematic section view of another illuminating unit.

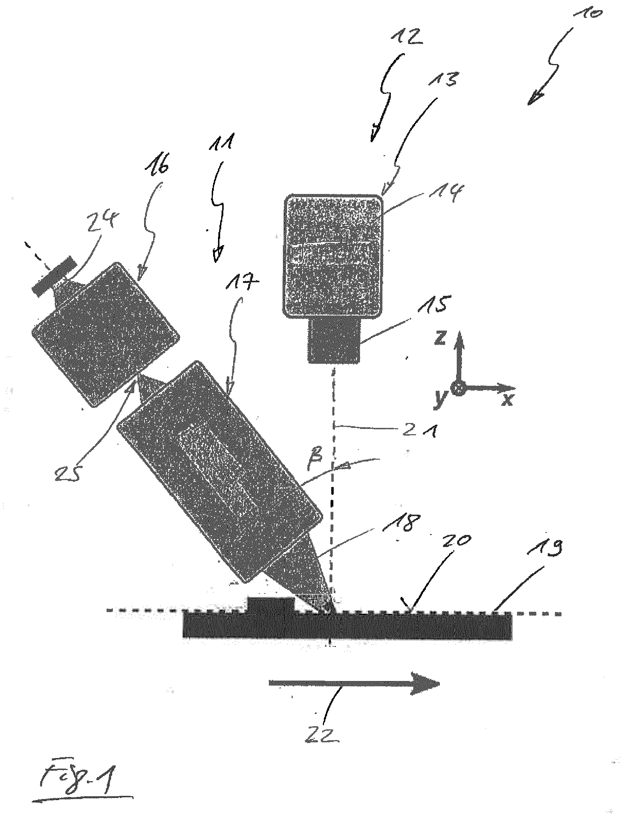

A combination of Figs. 1 to 3 shows a simplified schematic diagram of an inspection system 10 comprising a projection device 11, an optical detection device 12, and a processing device (not shown). Detection device 12 has a detection unit 13 comprising a camera 14 and an objective 15. Projection device 11 is composed of an illuminating unit 16 and a spectrometer member 17. Spectrometer member 17 is configured to split white light of illuminating unit 16 into its spectral components so that a multichromatic light beam 18 thus formed from monochromatic light beams can be projected onto a product 19 at an angle of incidence β. Light beam 18 is reflected by a product surface 20 of product 19 and runs toward objective 15 in a detection plane 21 of detection unit 13, detection plane 21 being perpendicular, preferably orthogonal, to product surface 20. Consequently, detection plane 21 is perpendicular to a direction of movement of product 19 relative to inspection system 10, the direction of movement being marked by an arrow 22. A height information of product surface 20 relative to camera 14 is derived by means of a processing device (not shown) from a spatial distribution of the reflected multichromatic light beam 18 onto a camera chip (not shown) of camera 14.

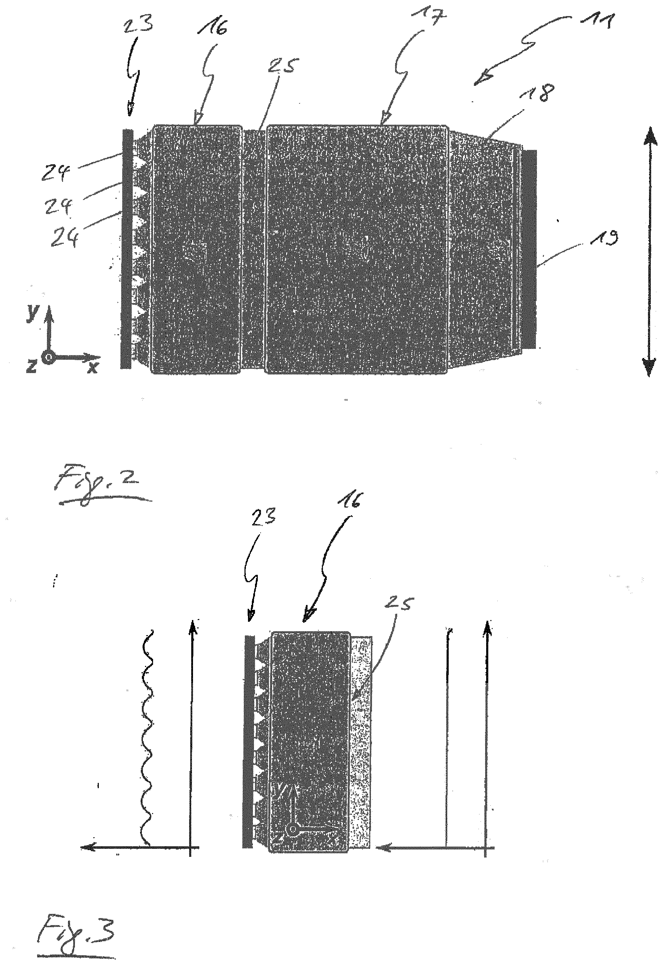

Illuminating unit 16 is provided with a row 23 of light-emitting diodes 24 and extends parallel to detection plane 21. In particular, a homogenous intensity distribution of the white light along detection plane 21 can be established at an exit aperture 25 of illuminating unit 16, exit aperture 25 extending along row 23. Spectrometer member 17 is configured to subsequently split the white light into its spectral components and shape it into multichromatic light beam 18. As can be seen in Fig. 3, a diagrammatically illustrated intensity distribution of the white light is uneven in the area of the light-emitting diodes and even, i.e., homogenous, in the area of exit aperture 25.

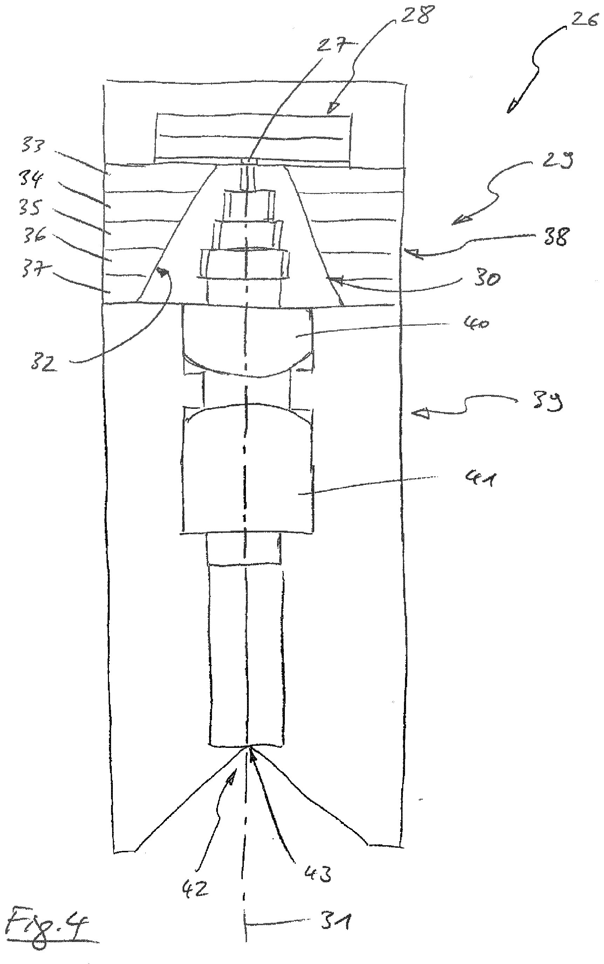

Fig. 4 shows a schematic illustration of another embodiment of an illuminating unit 26, which could also be employed in the inspection system described above. Illuminating unit 26 has light-emitting diodes 27 of an LED module 28, which are disposed in a row and spaced apart relative to each other. Each light-emitting diode 27 is associated with an aperture member 29, which is formed by a three-dimensional aperture 30. Aperture 30 has a cross section 32, which widens from light-emitting diode 27 in the direction of a beam path 31 of illuminating unit 26. In particular, aperture 30 is pyramidal. Furthermore, aperture 30 is formed by plane plates 33 to 37, which form a stack 38. Each light-emitting diode 27 is associated with a lens assembly 39, which comprises lenses 40 and 41 in the case at hand. Lens assembly 39 serves to converge and focus the white light of light-emitting diodes 27. A focal point of lens assembly 39 is formed in an exit aperture 42 of illuminating unit 26. Exit aperture 42 is formed by an uninterrupted air gap 43, which is hinted at in the drawings. The structure of illuminating unit 26 enables the production of white light with a homogenous intensity distribution along exit aperture 42. Consequently, a multichromatic light beam with a correspondingly homogenous intensity distribution can be formed on a product surface (not shown) of a product via a downstream spectrometer member.

### Reference signs

- 10: inspection system
- 11: projection device
- 12: optical detection device
- 13: detection unit
- 14: camera
- 15: objective
- 16: illuminating unit
- 17: spectrometer member
- 18: light beam
- 19: product
- 20: product surface
- 21: detection plane
- 22: arrow
- 23: row
- 24: light-emitting diode
- 25: exit aperture
- 26: illuminating unit
- 27: light-emitting diode
- 28: LED module
- 29: aperture member
- 30: aperture
- 31: beam path
- 32: cross section
- 33 to 37: plane plate
- 38: stack
- 39: lens assembly
- 40: lens
- 41: lens
- 42: exit aperture
- 43: air gap

## Claims

1. An inspection system (10) for analyzing defects in a product, in particular a printed circuit board product, a semiconductor wafer or the like, the inspection system comprising a projection device (11), an optical detection device (12), and a processing device, the projection device having an illuminating unit (16, 26) and a spectrometer member (17) configured to split white light into its spectral components and project a multichromatic light (18) beam thus formed from monochromatic light beams onto a product (19) at an angle of incidence β, the optical detection device having a detection unit (13) comprising a camera (14) and an objective (15), the camera being configured to detect the multichromatic light beam reflected on the product in a detection plane (21) of the detection unit, the detection plane being perpendicular, preferably orthogonal, to a product surface (20) of the product,
**characterized in that**
the illuminating unit has at least two light-emitting diodes (24, 27) disposed in a row (23) and an exit aperture (25, 42) extending along the row.

2. The inspection system according to claim 1,
**characterized in that**
the illuminating unit (16, 26) is configured to establish a homogenous intensity distribution of the white light along the detection plane (21).

3. The inspection system according to claim 1 or 2,
**characterized in that**
the illuminating unit (16, 26) has an LED module (28) comprising a plurality of light-emitting diodes (24, 27), the LED module being disposed parallel to the detection plane (21).

4. The inspection system according to any one of the preceding claims,
**characterized in that**
the illuminating unit (16, 26) has respective aperture members (29) associated with the light-emitting diodes (24, 27).

5. The inspection system according to claim 4,
**characterized in that**
the aperture member (29) has a three-dimensional aperture (30) which has a cross section (32) widening from the light-emitting diode (24, 27) in the direction of a beam path (31) of the projection device (11).

6. The inspection system according to claim 5,
**characterized in that**
the respective apertures (30) of the aperture members (29) are adjacent to one another.

7. The inspection system according to claim 5 or 6,
**characterized in that**
the aperture (30) has the shape of a pyramid.

8. The inspection system according to any one of claims 5 to 7,
**characterized in that**
the aperture (30) is formed by an optical component, preferably at least one plane plate (33, 34, 35, 36, 37).

9. The inspection system according to any one of claims 5 to 8,
**characterized in that**
the aperture (30) is formed by a stack (38) of optical components, preferably plane plates (33, 34, 35, 36, 37).

10. The inspection system according to any one of the preceding claims,
**characterized in that**
the illuminating unit (16, 26) has respective lens assemblies (39) associated with the light-emitting diodes (24, 27).

11. The inspection system according to claim 10,
**characterized in that**
the lens assembly (39) has at least two lenses (40, 41) which are configured to converge and/or focus the white light of the light-emitting diode (24, 27).

12. The inspection system according to claim 10 or 11,
**characterized in that**
a focal point of the lens assembly (39) is formed in the exit aperture (25, 42).

13. The inspection system according to any one of the preceding claims,
**characterized in that**
the exit aperture (25, 42) is formed by an uninterrupted air gap (43).

14. The inspection system according to any one of the preceding claims,
**characterized in that**
the spectrometer member (17) is disposed adjacent to and immediately downstream of the illuminating unit (16, 26) in the direction of the beam path (31) of the projection device (11).

15. The inspection system according to any one of the preceding claims,
**characterized in that**
the spectrometer member (17) has at least one diffractive and/or dispersive optical element which extends parallel to the detection plane (21).

16. The inspection system according to any one of the preceding claims,
**characterized in that**
the projection device (11) is configured to emit light of the wavelength ranges red, green, blue (RGB), infrared (IR), and/or ultraviolet (UV), preferably in a wavelength range of 400 nm to 700 nm, and the camera (14) is configured to detect said light.

17. A method for analyzing defects in a product, in particular a printed circuit board product, a semiconductor wafer or the like, the method using an inspection system (10), the inspection system comprising a projection device (11), an optical detection device (12), and a processing device, an illuminating unit (16, 26) and a spectrometer member (17) of the projection device being used to split white light into its spectral components and project a multichromatic light beam (18) thus formed from monochromatic light beams onto a product (19) at an angle of incidence β, the optical detection device having a detection unit (13) comprising a camera (14) and an objective (15), a multichromatic light beam being reflected on the product in a detection plane (21) of the detection unit, the detection plane being perpendicular, preferably orthogonal, to a product surface (20) of the product, the light beam being detected by the camera,
**characterized in that**
at least two light-emitting diodes (24, 27) disposed in a row (23) and an exit aperture (25, 42) of the illuminating unit extending along the row are used to establish a homogenous intensity distribution of the white light along the detection plane.
